# FASCICULE DE BREVET EUROPEEN

(11) **EP 0 637 147 B1**
(45) Date de publication et mention de la délivrance du brevet: **10.05.2000**
(21) Numéro de dépôt: 94401726.8
(22) Date de dépôt: 27.07.1994
(51) Int. Cl.: H04B 10/158

(54) **Dispositif d'accord de filtre optique accordable utilisable notamment en réception dans un système de transmission optique**
Abstimmungsvorrichtung eines optischen abstimmbaren Filters insbesondere zur Anwendung beim Empfang in einem optischen Übertragungssystem
Tunable optical filter tuning device in particular for use at reception in an optical transmission system

(30) Priorité: 30.07.1993 FR 9309425
(43) Date de publication de la demande: 01.02.1995
(73) Titulaire: ALCATEL, 75008 Paris (FR)
(72) Inventeur: Gautheron, Olivier, F-78180 Montigny le Bretonneux (FR); Coeurjolly, Christian, F-94400 Vitry Sur Seine (FR)
(74) Mandataire: Sciaux, Edmond

(56) Documents cités:
- EP-A- 0 534 644
- US-A- 4 164 650
- IBM TECHNICAL DISCLOSURE BULLETIN., vol.31, no.11, Avril 1989, NEW YORK US pages 271 - 274 N.N. 'Method of setting tunable optical filters in a wavelength division multiaccess system'

## Description

La présente invention concerne un dispositif d'accord de filtre optique accordable utilisable notamment en réception dans un système de transmission optique et destiné à rejeter une partie d'un bruit optique qui se superpose à un signal optique utile et qui a un spectre plus étendu que ce dernier.

Afin d'éviter toute dégradation, due à un tel filtrage, du signal optique utile transmis par un système de transmission optique, il est nécessaire de centrer correctement la bande passante d'un tel filtre par rapport à la longueur d'onde d'émission de ce système, c'est-à-dire par rapport à la longueur d'onde de la porteuse optique modulée par le signal porteur des informations à transmettre par ce système.

Un problème se pose alors car cette longueur d'onde d'émission n'est généralement pas connue avec une grande précision, que ce soit à la mise en service du système, ou lors d'une remise en service de ce système après une panne de son émetteur optique, ou bien encore en service, du fait d'une éventuelle dérive en longueur d'onde de cet émetteur optique.

Pour accorder un filtre optique accordable ainsi utilisé dans un système de transmission optique, à la mise en service de ce système, ou à sa remise en service, on procède en général manuellement en commandant ce filtre de façon à causer un déplacement de sa caractéristique le long de l'axe des longueurs d'onde et en observant simultanément le signal de sortie d'un détecteur de puissance optique moyenne disposé en sortie de ce filtre, en vue de stopper ledit déplacement lorsqu'une certaine puissance optique est détectée par ce détecteur de puissance optique moyenne.

Une telle façon de procéder a notamment pour inconvénient de présenter un risque d'accord dudit filtre sur une longueur d'onde pour laquelle la puissance optique détectée par ce détecteur de puissance optique moyenne correspond non pas à un signal optique utile mais à un bruit optique, et notamment au bruit optique, de forte puissance moyenne, créé par un préamplificateur optique de réception disposé en amont dudit filtre optique.

Une telle façon de procéder a en outre pour inconvénient de ne pas être automatisée, et donc d'être relativement lente à mettre en oeuvre.

Il est connu, par le document EP 0 534 644 d'automatiser l'accord d'un filtre optique pour un système de communication optique, en distinguant deux phases d'accord correspondant à deux types de déplacement :
- une phase de recherche pendant laquelle la caractéristique est déplacée avec une pente moyenne non nulle, jusqu'à ce qu'un signal pilote additionné aux donnée transmises, soit détecté;
- une phase d'asservissement, où le déplacement est commandé par un signal représentatif de l'amplitude du signal pilote reçu.

Ce dispositif de commande d'accord présente l'inconvénient de nécessiter des moyens supplémentaires dans la partie émettrice, pour superposer un signal pilote au signal utile. La partie réceptrice ainsi asservie ne peut pas être utilisée avec n'importe quelle partie émettrice classique.

Le document US 4 164 650 décrit un dispositif d'accord de filtre optique comportant : des moyens pour détecter un signal de modulation à basse fréquence et en déduire un signal de correction à appliquer au filtre, et qui tend à ramener à zéro l'écart éventuel entre la longueur d'onde de transmission du filtre et la longueur d'onde d'émission. La modulation à basse fréquence est produite localement au moyen d'un générateur de signal carré et d'un additionneur qui superpose le signal de correction et le signal carré. Le signal de correction est obtenu par un comparateur de phase comparant la phase du signal carré et celle du signal de modulation à basse fréquence, à la sortie des moyens pour détecter.

Ce dispositif ne comporte aucun moyen pour réaliser automatiquement un premier calage du filtre sur la longueur d'onde de transmission.

Une telle façon de procéder a notamment pour inconvénient de ne pas pouvoir ramener complètement à zéro ledit écart lorsque celui-ci devient trop important par rapport aux capacités de correction dudit asservissement, déterminées par ledit moyen d'amplification et de filtrage passe-bas.
La présente invention a pour but de proposer un dispositif d'accord comportant des moyens pour commander un déplacement, le long de l'axe des longueurs d'onde, de la caractéristique dudit filtre optique, et des moyens dits de détection d'accord permettant de détecter l'instant où ladite commande de déplacement peut être stoppée, caractérisé en ce que lesdits moyens de détection d'accord comportent un détecteur de puissance optique recevant un signal issu dudit filtre optique, et des moyens pour détecter toute modulation d'un signal issu dudit détecteur de puissance optique, ladite commande de déplacement pouvant être stoppée lorsque lesdits moyens pour détecter détectent une modulation dudit signal issu dudit détecteur de puissance optique à ce seuil.

Le dispositif ainsi caractérisé réalise un premier calage de l'accord en utilisant toute modulation affectant la porteuse optique reçue. En particulier, il peut utiliser la modulation constituée par les données transmises. Il ne nécessite donc pas de dispositif spécifique dans la partie émettrice.

D'autres objets et caractéristiques de la présente invention apparaîtront à la lecture de la description suivante d'exemples de réalisation, faite en relation avec les dessins ci-annexés dans lesquels:
- la figure 1 illustre un premier exemple de réalisation d'un dispositif suivant l'invention,
- la figure 2 rappelle la forme générale de la caractéristique d'un filtre optique accordable tel que, à titre d'exemple, un filtre optique Fabry-Pérot,
- la figure 3 rappelle la forme générale de la courbe donnant la puissance optique de sortie d'un amplificateur optique tel que, à titre d'exemple un amplificateur optique à fibre dopée, en fonction de la longueur d'onde, et pour une puissance optique d'entrée donnée de cet amplificateur optique,
- la figure 4 illustre un second exemple de réalisation d'un dispositif suivant l'invention.

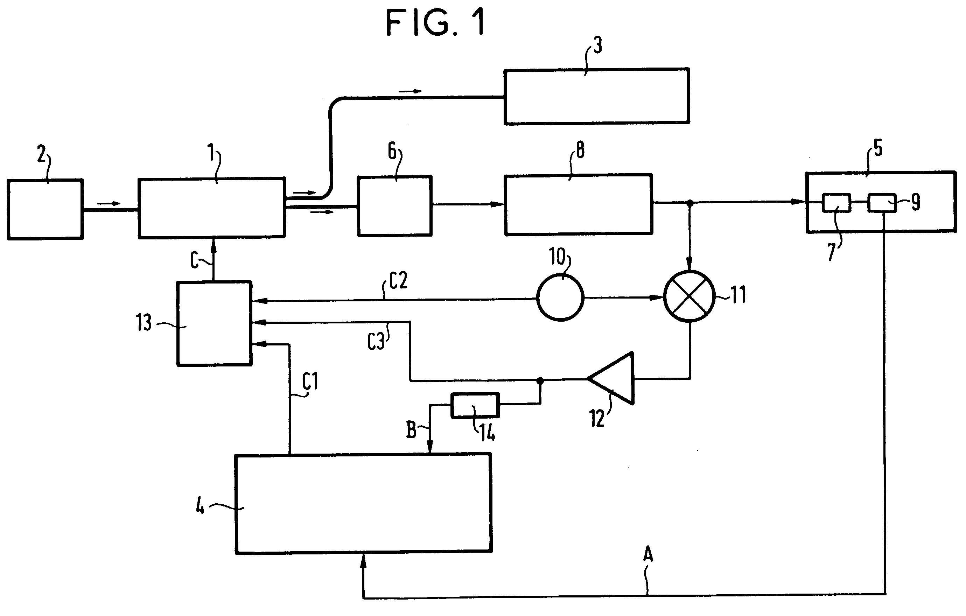

Sur la figure 1 est illustré un filtre optique accordable, à titre d'exemple un filtre optique Fabry-Pérot, noté 1, utilisé en l'occurrence en réception dans un système de transmission optique, et précédé en l'occurrence d'un préamplificateur optique, noté 2, la réception proprement dite étant par ailleurs assurée par un récepteur, noté 3.

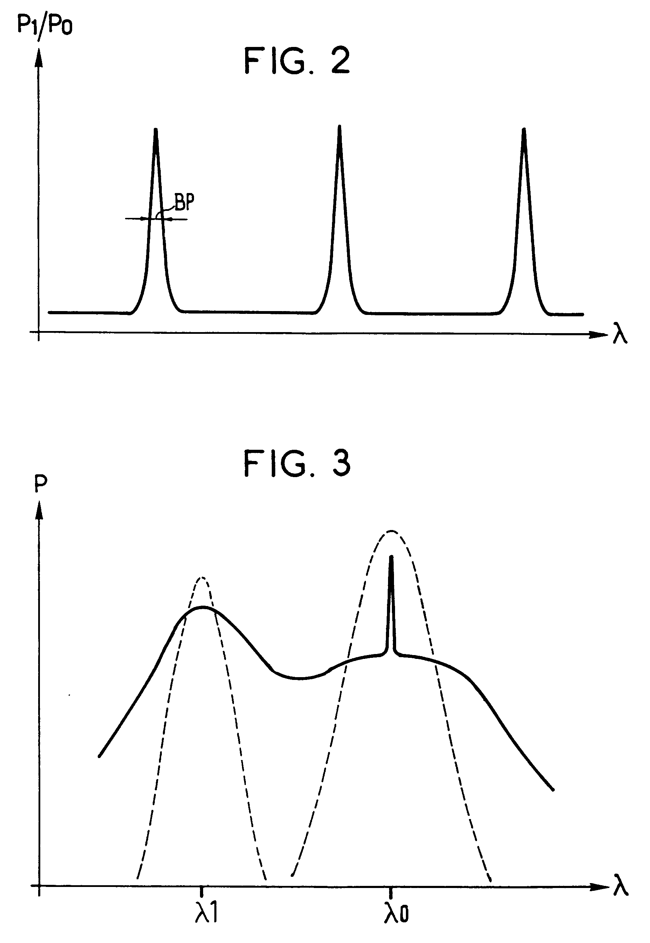

La forme générale de la caractéristique d'un filtre optique Fabry-Pérot est rappelée sur la figure 2, où la longueur d'onde, notée λ, figure en abscisse et où le rapport de puissance optique P1/Po figure en ordonnée, où Po désigne la puissance optique en entrée de ce filtre et P1 la puissance optique en sortie de ce filtre.

Cette caractéristique présente en l'occurrence une succession de pics dont la largeur à mi-hauteur définit la bande passante de ce filtre, notée BP, les différentes longueurs d'onde sur lesquelles sont centrés ces différents pics définissant alors différentes longueurs d'onde dites de transmission de ce filtre.

Le dispositif d'accord du filtre optique accordable 1 illustré sur la figure 1 comporte des moyens pour commander un déplacement, le long de l'axe des longueurs d'onde, de la caractéristique du filtre optique 1 et des moyens dits de détection d'accord permettant de détecter l'instant où ladite commande de déplacement peut être stoppée.

Les moyens pour commander un déplacement, le long de l'axe des longueurs d'onde, de la caractéristique du filtre optique 1 comportent en l'occurrence un générateur de rampe, noté 4, permettant d'appliquer au filtre 1 un signal de commande en forme de rampe, noté C1. Ce signal de commande en forme de rampe permet lui-même à la caractéristique de ce filtre de se déplacer, en l'occurrence linéairement, le long de l'axe des longueurs d'onde, ou du moins le long d'une portion de cet axe égale à l'excursion correspondant à ladite rampe.

La forme générale de la courbe donnant la puissance optique de sortie du préamplificateur optique 2, en fonction de la longueur d'onde, pour une puissance optique d'entrée donnée de cet amplificateur optique, et à titre d'exemple pour le cas d'un amplificateur optique à fibre dopée, est rappelée sur la figure 3, où la longueur d'onde, λ, figure en abscisse et où la puissance optique, notée P, figure en ordonnée.

Sur cette courbe le signal optique utile est représenté par un pic de largeur relativement faible (correspondant en pratique à quelques dixièmes de nm par exemple) centré sur la longueur d'onde d'émission, notée λo (égale par exemple en pratique à 1,55 µm) et de puissance relativement forte.

Le bruit optique dû au préamplificateur optique a un spectre beaucoup plus étendu (correspondant en pratique à quelques dizaines de nm par exemple) et a également une puissance optique relativement forte, particulièrement autour d'une longueur d'onde notée λ1 (égale par exemple en pratique à 1,53 µm).

Sur cette figure 3 on a en outre rappelé, en pointillés, la forme générale de l'un des pics de la caractéristique, rappelée sur la figure 2, d'un filtre optique Fabry-Pérot, pour deux positions distinctes de la longueur d'onde centrale de ce pic, correspondant l'une à la longueur d'onde λ1, l'autre à la longueur d'onde λo, et on note ainsi le risque d'accord dudit filtre optique sur la longueur d'onde λ1 au lieu de la longueur d'onde λo, en mettant en oeuvre par exemple un simple critère de détection d'accord basé sur l'observation du signal de sortie d'un détecteur de puissance optique moyenne placé en sortie dudit filtre optique.

Pour permettre d'accorder effectivement le filtre optique sur la longueur d'onde d'émission λo, et non sur une longueur d'onde telle que λ1, ladite détection d'accord est réalisée, dans un dispositif suivant l'invention, par des moyens dits de détection de modulation, notés 5, recevant le signal issu d'un détecteur de puissance optique, noté 6, disposé en sortie du filtre optique 1.

Le principe mis en oeuvre par ces moyens de détection de modulation consiste dans le fait que le bruit dit électrique correspondant, après détection de puissance optique par le détecteur de puissance optique 6, audit bruit optique, a un spectre qui, bien que plus étendu que celui du signal électrique porteur des informations à transmettre et correspondant, après détection de puissance optique par le détecteur de puissance optique 6, audit signal optique utile, a, pour chacune des fréquences de ce spectre, une amplitude très inférieure à ce qu'elle est pour le spectre de ce signal électrique porteur des informations à transmettre, hormis, pour le cas plus particulièrement considéré ici d'un bruit optique correspondant au bruit créé par un amplificateur optique, pour la fréquence nulle, puisque ledit bruit optique a alors une forte puissance optique moyenne.

Les moyens de détection de modulation 5 comportent plus précisément, dans l'exemple illustré:
- des moyens, notés 7, de mesure d'une grandeur caractéristique de l'amplitude du signal issu, en l'occurrence à travers un préamplificateur 8, du détecteur de puissance optique 6, cette grandeur caractéristique étant autre que la valeur moyenne (par exemple la valeur crête ou la valeur efficace), et ces moyens de mesure ayant une bande passante excluant la fréquence nulle et incluant tout ou partie des fréquences formant le spectre du signal électrique porteur des informations à transmettre,
- des moyens, notés 9, pour comparer le résultat fourni par ces moyens de mesure à un seuil, déterminé, par exemple expérimentalement, pour que, si le signal reçu par les moyens de détection de modulation est uniquement constitué par du bruit, le résultat fourni par ces moyens de mesure soit inférieur à ce seuil, et, sinon, le résultat fourni par ces moyens de mesure soit supérieur à ce seuil.

Dans le cas considéré, les moyens de mesure 7 sont tels que la comparaison effectuée par les moyens 9 s'effectue dans le sens indiqué ci-dessus, mais il serait bien entendu possible de prévoir d'autres cas.

Tant que les moyens de détection de modulation ne détectent pas de modulation du signal qui leur est appliqué, c'est-à-dire, dans le cas considéré, tant que le résultat fourni par lesdits moyens de mesure est inférieur audit seuil, la génération dudit signal de commande en forme de rampe est commandée, en l'occurrence par l'intermédiaire d'un signal, noté A, issu des moyens 9 et appliqué à une entrée de commande du générateur de rampe 4.

Lorsque les moyens de détection de modulation 5 détectent une modulation du signal qui leur est appliqué, c'est-à-dire, dans le cas considéré, lorsque le résultat fourni par lesdits moyens de mesure est supérieur audit seuil, l'arrêt de la génération dudit signal de commande en forme de rampe pourrait, notamment si le filtre optique ne présentait aucune inertie dans son mode de commande, être commandé, ce qui permettrait d'obtenir l'accord recherché.

Dans l'exemple de réalisation illustré, la génération d'un signal de commande en forme de rampe (et donc le déplacement de la caractéristique du filtre optique) continue cependant à être commandée une fois que les moyens de détection de modulation ont détecté une modulation du signal qui leur est appliqué, et le signal de commande en forme de rampe alors généré a en outre avantageusement une pente inférieure, en valeur absolue, à celle du signal de commande en forme de rampe généré tant que les moyens de détection de modulation n'ont pas détecté de modulation du signal qui leur est appliqué.

La génération de ce signal de commande en forme de rampe avantageusement de pente moindre est en outre commandée, ainsi qu'il va maintenant être décrit, par l'intermédiaire de moyens dits d'asservissement permettant d'obtenir le maintien dudit accord, en service.

Ces moyens d'asservissement comportent en l'occurrence:
- un générateur, noté 10, de signal de commande du filtre optique 1, constitué par un signal de commande sinusoïdal à basse fréquence, noté C2,
- un comparateur de phase, noté 11, recevant d'une part le signal issu du générateur 10, et d'autre part le signal issu du détecteur de puissance 6, en l'occurrence à travers le préamplificateur 8,
- un moyen, noté 12, d'amplification et de filtrage passe-bas du signal issu du comparateur de phase 11, en vue d'obtenir un signal dit de correction, noté C3, appliqué au filtre optique 1 en vue de réduire l'écart entre celle des longueurs d'onde dites de transmission du filtre optique Fabry-Pérot 1, pour laquelle ledit accord a été détecté, et la longueur d'onde d'émission, en cas de dérive de l'une ou l'autre de ces longueurs d'onde.

Les signaux C1, C2 et C3 de commande du filtre optique 1 sont superposés au moyen d'un additionneur 13 pour donner un signal de commande, noté C, appliqué à ce filtre.

Le dispositif de commande d'accord illustré sur la figure 1 comporte en outre des moyens, notés 14, pour comparer le signal de correction C3 issu du moyen 12 d'amplification et de filtrage passe-bas, à une valeur seuil. Le signal, noté B, issu de ces moyens 14, est utilisé pour commander la génération dudit signal de commande en forme de rampe avantageusement de pente moindre, en valeur absolue, cette génération étant maintenue, dans l'exemple considéré, lorsque ledit signal de correction est supérieur à cette valeur seuil, et étant stoppée dans le cas contraire.

La génération d'un tel signal de commande en forme de rampe, avantageusement de pente moindre, une fois que lesdits moyens de détection de modulation ont détecté une modulation du signal qui leur est appliqué, permet ainsi d'éviter que ne se produise une situation où l'écart entre celles des longueurs d'onde de transmission du filtre optique Fabry-Pérot 1, pour laquelle ledit accord a été détecté, et la longueur d'onde d'émission, dû à une dérive de l'une ou l'autre de ces longueurs d'onde, excéderait les capacités de correction desdits moyens d'asservissement.

Ladite rampe de pente moindre est, dans l'exemple illustré, générée par le même générateur 4, le choix de la pente de la rampe délivrée par ce générateur de rampe étant en l'occurrence commandé par le signal, A , issu des moyens 5 de détection de modulation, ladite pente moindre étant en effet choisie lorsque les moyens 5 détectent une modulation du signal qui leur est appliqué.

On notera par ailleurs qu'une fois que les moyens de détection de modulation ont détecté une modulation du signal qui leur est appliqué, il y a lieu de déterminer le sens de la rampe à appliquer, ce sens étant fonction du signe du signal de correction C3 et pouvant donc être indiqué par le signal B.

Le sens de la rampe appliquée tant que les moyens de détection de modulation n'ont pas détecté de modulation du signal qui leur est appliqué pourra par contre être fixé une fois pour toutes, par exemple également par l'intermédiaire du signal B puisque le signal de correction C3, a, au cours de cette application, un signe déterminé.

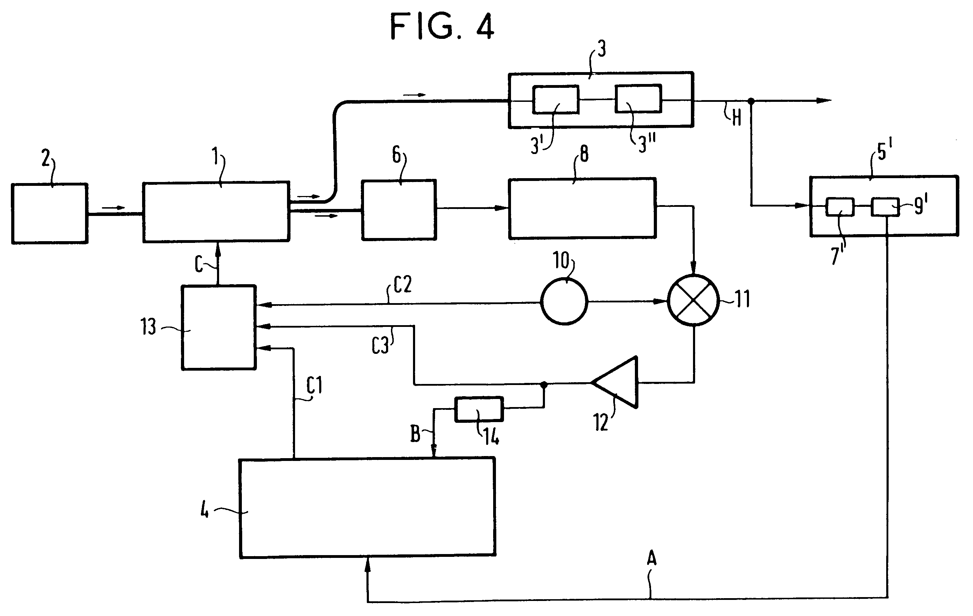

L'exemple de réalisation illustré sur la figure 4 ne diffère de celui illustré sur la figure 1 que par la localisation des moyens de détection de modulation, notés alors 5', qui sont alors localisés en aval du récepteur 3.

Dans l'exemple de réalisation plus particulièrement illustré, à titre d'exemple, sur la figure 4, les informations transmises sont supposées numériques, et les moyens 5' de détection de modulation opèrent à partir d'un signal d'horloge, noté H, correspondant au rythme de transmission desdites informations, récupéré par le récepteur 3, auquel cas les moyens de mesure notés alors 7', de ces moyens 5', mesurent une grandeur caractéristique de l'amplitude de ce signal d'horloge, et la bande passante de ces moyens de mesure peut être limitée à la fréquence de ce signal d'horloge.

Dans cet exemple de réalisation, les moyens 5' de détection de modulation opèrent à partir d'un signal issu de moyens de traitement, notés 3'', incluant éventuellement un préamplificateur, compris dans le récepteur 3, et recevant un signal issu d'un détecteur de puissance optique, noté 3', également compris dans le récepteur 3.

On notera que les moyens 5' de détection de modulation pourraient, quelle que soit la nature, numérique ou analogique, des informations transmises, opérer, non pas à partir du signal d'horloge récupéré H, mais à partir d'un signal correspondant à ces informations transmises, restituées par le récepteur 3.

On notera aussi qu'un autre exemple de réalisation serait possible dans lequel au lieu de prévoir deux détecteurs de puissance optique distincts, 3' et 6, et leurs préamplificateurs associés, on pourrait ne prévoir qu'un seul et même détecteur de puissance optique et préamplificateur associé.

On notera par ailleurs qu'un dispositif suivant l'un ou l'autre de ces divers exemples de réalisation peut être utilisé non seulement dans le cas où ledit signal porteur des informations à transmettre module ladite porteuse optique en intensité, mais aussi dans le cas où il module cette porteuse optique autrement qu'en intensité, à condition de prévoir une conversion d'une telle modulation vers une modulation d'intensité avant le détecteur de puissance optique utilisé dans ce dispositif.

## Revendications

1. Dispositif d'accord de filtre optique accordable (1) utilisable notamment en réception dans un système de transmission optique, et destiné à rejeter une partie d'un bruit optique se superposant à un signal optique utile, dispositif comportant des moyens (4) pour commander un déplacement, le long de l'axe des longueurs d'onde, de la caractéristique dudit filtre optique, et des moyens dits de détection d'accord permettant de détecter l'instant où ladite commande de déplacement peut être stoppée, caractérisé en ce que lesdits moyens de détection d'accord comportent un détecteur de puissance optique (6-3') recevant un signal issu dudit filtre optique, et des moyens (5-5') pour détecter toute modulation d'un signal issu dudit détecteur de puissance optique, ladite commande de déplacement pouvant être stoppée lorsque lesdits moyens pour détecter détectent une modulation dudit signal issu dudit détecteur de puissance optique.

2. Dispositif selon la revendication 1, caractérisé en ce que, ledit bruit optique étant notamment constitué par le bruit crée par un préamplificateur optique de réception (2), lesdits moyens pour détecter toute modulation (5) comportent:
- des moyens dits de mesure (7) pour mesurer une grandeur caractéristique de l'amplitude dudit signal issu dudit détecteur de puissance optique, autre que sa valeur moyenne, ces moyens de mesure ayant en outre une bande passante excluant la fréquence nulle et incluant tout ou partie des fréquences formant le spectre du signal porteur des informations à transmettre par ce système,
- des moyens (9) pour comparer le résultat fourni par lesdits moyens de mesure à un seuil déterminé pour que, suivant que le signal reçu par ledit détecteur de puissance optique est uniquement constitué par ledit bruit optique, ou non, le résultat fourni par lesdits moyens de mesure soit situé différemment par rapport à ce seuil.

3. Dispositif selon l'une des revendications 1 et 2, caractérisé en ce qu'il comporte en outre des moyens dits de maintien d'accord, comportant eux-mêmes des moyens d'asservissement (10, 11, 12) comportant à leur tour des moyens pour élaborer un signal dit de correction (C3) appliqué audit filtre, caractérisé en ce qu'il comporte en outre:
- des moyens pour continuer à commander un déplacement de la caractéristique dudit filtre optique une fois que lesdits moyens pour détecter toute modulation ont détecté une modulation dudit signal issu dudit détecteur de puissance optique,
- des moyens (14) pour comparer ledit signal de correction par rapport à un seuil, et
- des moyens pour stopper ladite commande de déplacement en fonction de la situation dudit signal de correction par rapport à ce seuil.

4. Dispositif selon la revendication 3, dans lequel ladite commande de déplacement est obtenue en appliquant audit filtre un signal de commande (C1) en forme de rampe, caractérisé en ce que lesdits moyens pour continuer à commander ledit déplacement une fois que les moyens pour détecter toute modulation (5-5') ont détecté une modulation dudit signal issu dudit détecteur de puissance optique (6-3') comportent des moyens pour appliquer audit filtre un signal de commande en forme de rampe de pente inférieure, en valeur absolue, à celle du signal de commande en forme de rampe appliquée audit filtre tant que les moyens pour détecter toute modulation n'ont pas détecté de modulation dudit signal issu dudit détecteur de puissance optique.

5. Dispositif selon la revendication 1, caractérisé en ce que, dans le cas d'utilisation en réception dans un système de transmission optique, lesdits moyens pour détecter toute modulation sont des moyens de détection de modulation d'un signal issu d'un récepteur (3) assurant ladite fonction de réception.

6. Dispositif selon la revendication 5, caractérisé en ce que dans le cas où les informations transmises par ledit système sont des informations numériques, ledit signal issu dudit récepteur est un signal d'horloge (H) correspondant au rythme de transmission desdites informations.

7. Dispositif selon la revendication 6, caractérisé en ce que ledit bruit optique étant notamment constitué par le bruit créé par un préamplificateur optique de réception (2) lesdits moyens pour détecter toute modulation (5') comportent:
- des moyens dits de mesure (7') pour mesurer une grandeur caractéristique de l'amplitude dudit signal d'horloge, ces moyens de mesure ayant en outre une bande passante pouvant être limitée à la fréquence dudit signal d'horloge,
- des moyens (9') pour comparer le résultat fourni par lesdits moyens de mesure à un seuil déterminé pour que, suivant que le signal reçu par ledit détecteur de puissance optique est uniquement constitué par ledit bruit optique, ou non, le résultat fourni par lesdits moyens de mesure soit situé différemment par rapport à ce seuil.

## Claims

1. Tunable optical filter tuning device (1) suitable for use in the receive part of an optical transmission system and adapted to reject some optical noise superimposed on a wanted optical signal, said device including means (4) for commanding displacement of the characteristic of said optical filter along the wavelength axis and tuning detector means adapted to detect the time at which said displacement can be stopped, characterized in that said tuning detector means include an optical power detector (6-3') receiving a signal from said optical filter and means (5-5') for detecting any modulation of a signal from said optical power detector, said displacement being stopped when said detector means detect modulation of said signal from said optical power detector.

2. Device according to claim 1, characterized in that, said optical noise comprising noise created by a receive optical preamplifier (2), said modulation detector means (5) include:
- measuring means (7) for measuring a magnitude characteristic of the amplitude of said signal from said optical power detector other than its mean value, said measuring means having a bandwidth excluding the null frequency and including some or all of the frequencies forming the spectrum of the signal conveying information to be transmitted by the system,
- means (9) for comparing the result supplied by said measuring means to a predetermined threshold so that, according to whether the signal received by said optical power detector is entirely constituted of said optical noise or not, the result supplied by said measuring means is differently situated relative to said threshold.

3. Device according to claim 1 or claim 2, characterized in that it further comprises tuning maintaining means including control loop means (10, 11, 12) including means for producing a correction signal (3) applied to said filter and further comprising:
- means for continuing to command displacement of the characteristic of said optical filter after said modulation detector means have detected modulation of said signal from said optical power detector,
- means (14) for comparing said correction signal with a threshold, and
- means for stopping said displacement according to the situation of said correction signal relative to said threshold.

4. Device according to claim 3, characterized in that said displacement is effected by applying a ramp control signal (C1) to said filter and in that said means for continuing to command said displacement when said modulation detector means (5-5') have detected modulation of said signal from said optical power detector (6-3') include means for applying to said filter a ramp control signal of lower slope, in absolute value, than the ramp control signal applied to said filter when said modulation detector means have not detected modulation of said signal from said optical power detector.

5. Device according to claim 1, characterized in that, when used in the receive part of an optical transmission system, said modulation detector means are means for detecting the modulation of a signal from a receiver (3) implementing the receive function.

6. Device according to claim 5, characterized in that, when the information conveyed by said system is digital information, said signal from said receiver is a clock signal (H) with a clock rate corresponding to the transmission rate of said information.

7. Device according to claim 6, characterized in that, when said optical noise comprises noise created by a receive optical preamplifier (2), said modulation detector means (5') include:
- measuring means (7') for measuring a magnitude characteristic of the amplitude of said clock signal, said measuring means having a bandwidth which can be restricted to the frequency of said clock signal,
- means (9') for comparing the result provided by said measuring means with a specific threshold so that, depending on whether the signal received by said optical power detector is entirely constituted of said optical noise or not, the result supplied by said measuring means is differently situated relative to said threshold.

## Patentansprüche

1. Abstimmungsvorrichtung eines abstimmbaren optischen Filters (1), der insbesondere für die Aufnahme in einem optischen Übertragungssystem verwendbar ist und dazu bestimmt ist, einen Teil eines optischen Rauschens zu unterdrücken, welches ein nutzbares optisches Signal überlagert, wobei die Vorrichtung Einrichtungen (4) umfaßt, zur Steuerung eines Versatzes entlang der Achse der Wellenlängen der Charakteristik des optischen Filters; und Einrichtungen zur Abstimmungserfassung, die es ermöglichen, den Moment zu erfassen, in dem die Versatzsteuerung gestoppt werden kann, dadurch gekennzeichnet, daß die Einrichtungen zur Abgleicherfassung einen Detektor der optischen Leistung (6-3') umfassen, der ein Signal aufnimmt, das von dem optischen Filter abgegeben wird, und Einrichtungen (5-5') zur Erfassung der Modulation eines Signals, das von dem Detektor der optischen Leistung abgegeben wird, wobei die Versatzsteuerung gestoppt werden kann, wenn die Einrichtungen zur Erfassung eine Modulation des Signals erfassen, das von dem Detektor der optischen Leistung abgegeben wird.

2. Vorrichtung nach Anspruch 1, dadurch gekennzeichnet, daß das optische Rauschen im wesentlichen durch das Rauschen gebildet wird, welches durch einen optischen Empfangsvorverstärker (2) erzeugt wird, wobei die Einrichtungen zur Erfassung der Modulation (5) umfassen:
- Meßeinrichtungen (7) zur Messung einer charakteristischen Größe der Amplitude des Signals, das von dem Detektor der optischen Leistung abgegeben wird, und das anders ist als der Mittelwert, wobei die Meßeinrichtungen andererseits ein Durchgangsband haben, das die Nullfrequenz ausschließt und die gesamte oder einen Teil der Frequenzen einschließt, die das Spektrum des Trägersignals der durch das System zu übertragenden Informationen bilden,
- Einrichtungen (9) zum Vergleich des Resultates, das von den Meßeinrichtungen zur Verfügung gestellt wird, mit einem bestimmten Schwellwert, um, je nach dem, ob das Signal, das von dem Detektor der optischen Leistung empfangen wird, ausschließlich durch das optische Rauschen gebildet wird oder nicht, das durch die Meßeinrichtungen zur Verfügung gestellte Resultat bezüglich des Schwellwertes unterschiedlich anzuordnen.

3. Vorrichtung nach einem der Ansprüche 1 und 2, dadurch gekennzeichnet, daß sie darüber hinaus Einrichtungen zur Aufrechterhaltung des Abgleiches (10, 11, 12) umfassen, die ihrerseits Einrichtungen zur Ausarbeitung eines Korrektursignals (C3) umfassen, das an den Filter angelegt wird, dadurch gekennzeichnet, daß sie andererseits umfaßt:
- Einrichtungen zur Fortsetzung der Steuerung des Versatzes der Charakteristik des optischen Filters, wenn die Einrichtungen zur Erfassung einer Modulation eine Modulation des Signals erfaßt haben, das von dem Detektor der optischen Leistung abgegeben wurde,
- Einrichtungen (14) zum Vergleich des Korrektursignals mit einem Schwellwert und
- Einrichtungen zum Stoppen der Steuerung des Versatzes als Funktion der Situation des Korrektursignals bezüglich des Schwellwertes.

4. Vorrichtung nach Anspruch 3, bei der die Steuerung des Versatzes durch das Anlegen eines Steuersignals (C1) an den Filter erzielt wird, in der Form einer Rampe, dadurch gekennzeichnet, daß die Einrichtungen zur Fortsetzung der Steuerung des Versatzes im Falle, daß die Einrichtungen zur Erfassung einer Modulation (5-5') eine Modulation des Signals erfaßt haben, das vom Detektor der optischen Leistung (6-3') erfaßt wurde, Einrichtungen zum Anlegen eines Steuersignals an den Filter umfassen, mit einer Neigung, die im absoluten Wert kleiner ist, als diejenige des Steuersignals in der Form einer Rampe, das an den Filter angelegt wird, wenn die Einrichtung zur Erfassung einer Modulation keine Modulation des Signals erfaßt haben, das von dem Detektor der optischen Leistung abgegeben wird.

5. Vorrichtung nach Anspruch 1, dadurch gekennzeichnet, daß im Falle der Verwendung bei Empfang in einem optischen Übertragungssystem die Einrichtungen zur Erfassung einer Modulation Einrichtungen zur Erfassung der Modulation eines Signals sind, daß von einem Rezeptor (3) abgegeben wird, der die Funktion des Empfanges sicherstellt.

6. Vorrichtung nach Anspruch 5, dadurch gekennzeichnet, daß in dem Fall, in dem die durch das System übertragenen Informationen numerische Informationen sind, das von dem Rezeptor abgegebene Signal ein Zeitsignal (H) ist, das dem Übertragungsrythmus der Informationen entspricht.

7. Vorrichtung nach Anspruch 6, dadurch gekennzeichnet, daß das optische Rauschen im wesentlichen durch das Rauschen gebildet wird, welches durch einen optischen Empfangsvorverstärker (2) der Einrichtungen zur Erfassung einer Modulation (5') erzeugt wird, umfassend:
- Meßeinrichtungen (7') zur Messung einer charakteristischen Größe der Amplitude des Zeitsignals, wobei die Meßeinrichtungen andererseits ein Durchgangsband haben, das auf die Frequenz des Zeitsignals begrenzt sein kann,
- Einrichtungen (9') zum Vergleich des Resultates, welches durch die Meßeinrichtungen zur Verfügung gestellt wird, mit einem bestimmten Schwellwert, um, je nach dem ob das durch den Detektor der optischen Leistung empfangene Signal ausschließlich durch das optische Rauschen gebildet wird oder nicht, das durch die Meßeinrichtungen zur Verfügung gestellte Signal bezüglich des Schwellwertes unterschiedlich zu positionieren.
